# EUROPÄISCHE PATENTSCHRIFT

(11) **EP 0 532 951 B1**
(45) Veröffentlichungstag und Bekanntmachung des Hinweises auf die Patenterteilung: **06.03.1996**
(21) Anmeldenummer: 92114590.0
(22) Anmeldetag: 27.08.1992
(51) Int. Cl.: B01D 17/032, B01D 21/24

(54) **Verfahren zum Betrieb eines Sink- und Leichtstoffabscheiders und Abscheider**
Method for operating a separator for heavy and light materials and corresponding separator
Procédé pour le fonctionnement d'un séparateur de matières flottantes et sédimentaires et séparateur correspondant

(30) Priorität: 20.09.1991 DE 4131320
(43) Veröffentlichungstag der Anmeldung: 24.03.1993
(73) Patentinhaber: PASSAVANT-WERKE AG, D-65322 Aarbergen 7 (DE)
(72) Erfinder: Helffenstein, Kurt, D-65558 Flacht (DE); Wetten, Heinz-Josef, W-6253 Hadamar 1 (DE)

(56) Entgegenhaltungen:
- EP-A- 0 333 925
- DE-U- 9 005 311
- DE-U- 9 015 094
- DE-U- 9 105 725
- US-A- 2 564 172

## Beschreibung

Die Erfindung bezieht sich auf das Reinigen von Abwässern, die mit Leichtstoffen, insbesondere Ölen und Fetten, und Sinkstoffen, wie z.B. Stärke, verschmutzt sind. Diese Abwässer müssen vor Einleiten in die Kanalisation durch einen Abscheider nach DIN geleitet werden.

Die nach DIN ausgebildeten Abscheider bestehen aus einem im wesentlichen horizontal beruhigt durchströmten Abscheidebehälter, bei dem der Zulauf durch eine Prall- oder Leitwand nach unten gelenkt wird und sich an die gegenüberliegende untere Reinwasser-Ablauföffnung ein Steigkanal mit Überlaufschwelle zur Einstellung eines Flüssigkeitsspiegels anschließt.

Die Normen DIN 1999 und DIN 4040 schreiben vor, daß Abscheider in bestimmten vorgegebenen Zeitabständen zu entleeren sind. Auf jeden Fall ist der Abscheider zu entleeren, wenn die Speicherfähigkeit für die Leichtstoffe erschöpft ist. Dazu wird der gesamte Abscheiderinhalt von einem Saugwagen aufgenommen und vorschriftsmäßig entsorgt. Nach dem Entleeren muß gemäß diesen Normen der Abscheider mit verschmutzungsfreiem Wasser wiederbefüllt werden, damit bei der Wiederinbetriebnahme keine Verschmutzungen durch die dann frei zugängliche Reinwasser-Ablauföffnung abfließen können.

Für das Wiederbefüllen wird in der Regel Trinkwasser verwendet. Da Trinkwasser für diesen Zweck zu teuer ist, wird das Wiederbefüllen meist unterlassen, was die oben beschriebenen schädlichen Folgen hat.

Es ist bereits vorgeschlagen worden, für das Wiederbefüllen das im vorgeschalteten Schlammfang als überstand gespeicherte Klarwasser zu verwenden und dafür eine absperrbare Verbindung vom Schlammfang zum Abscheider vorzusehen (DE-U-90 15 094). Diese Wassermenge dürfte aber in den seltensten Fällen zum vollständigen Wiederbefüllen ausreichen. Es muß dann doch noch Trinkwasser nachgefüllt werden, um den Spiegel im Abscheider bis über die Reinwasser-Ablauföffnung zu heben.

Bei einem anderen bekannten Abscheider für fetthaltiges Abwasser (DE-U-90 05 311) ist der Reinwasser-Ablauföffnung eine überfallwand und davor eine Tauchwand vorgeordnet. Die Tauchwand kann jedoch nicht verhindern, daß bei Wiederinbetriebnahme ohne vorherige Wiederbefüllung dann schon abgeschiedene Leichtstoffe über die überfallwand in die Reinwasser-Ablauföffnung abfließen können.

Bei einem weiteren bekannten Abscheider dieser Gattung (DE-U-91 05 725) ist die untenliegende Reinwasser-Ablauföffnung mit einem Verschlußorgan ausgerüstet, das nach dem vollständigen Entleeren des Abscheiders solange geschlossen gehalten wird, bis der Spiegel durch die Wiederinbetriebnahme ausreichend weit über die Tauchwand gestiegen ist. Durch dieses Verschlußorgan kann das Wiederbefüllen unterlassen werden.

Es bestand demnach die Aufgabe, nach einem Wiederbefüllungsverfahren zu suchen, bei dem mit geringsten Mengen an Frisch- oder Brauchwasser der Norm Genüge getan wird.

Diese Aufgabe wird nunmehr in überraschend einfacher Weise dadurch gelöst, daß nur in der näheren Umgebung der Reinwasser-Ablauföffnung ein gegenüber dem Abscheidervolumen kleines verschmutzungsfreies, bis auf die Füllhöhe reichendes Wiederbefüllvolumen eingebracht wird. Nach Wiederinbetriebnahme füllt sich das Restvolumen des Abscheiders mit Abwasser, das dann nach vorschriftsmäßiger Abtrennung der Schmutzstoffe den Wiederbefüllungsspiegel erreicht. Die Gefahr, daß Verschmutzungen in die Reinwasser-Ablauföffnung ablaufen können, ist nicht mehr gegeben. Das Wiederbefüllungsvolumen ist so klein, daß es kostenmäßig nicht mehr ins Gewicht fällt. Die Norm ist durch diese neue Maßnahme ebenfalls erfüllt.

Um zu verhindern, daß beim Entleeren des Abscheiders das durch Stauwände abgegrenzte kleine Wiederbefüllungsvolumen nicht entleert wird, wird in Ausgestaltung des neuen Verfahrens dieses Volumen selbsttätig zum Restvolumen des Abscheiders geöffnet und dadurch ebenfalls mit abgezogen.

Das kleine Wiederbefüllungsvolumen kann auch in den Steigkanal hinter der Reinwasser-Ablauföffnung eingebracht werden. Dies hat den Vorteil, daß der bei Öl- und Benzinabscheidern vorgeschriebene Schwimmerverschluß, der sich beim Entleeren des Abscheiders auf den vor der Ablauföffnung liegenden Ventilsitz gesetzt hat, beim Wiederbefüllen selbsttätig abgehoben wird und dann wieder betriebsbereit ist.

Mehrere zur Durchführung dieses Verfahrens geeignete bevorzugte Ausführungsformen von Abscheidern werden nachfolgend anhand der Abbildungen beschrieben. Die dort ersichtlichen Merkmale sind Gegenstand von weiteren Unteransprüchen.

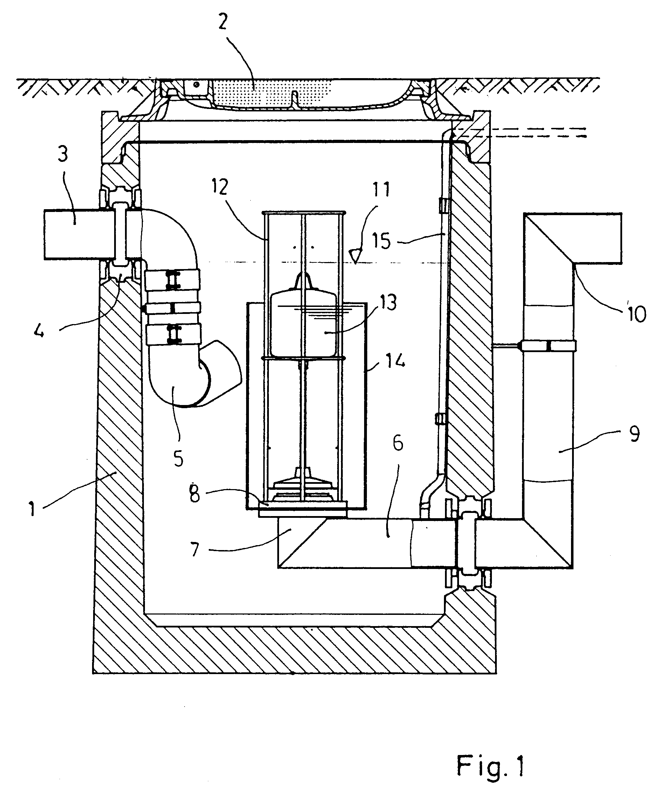

Es zeigen:
- Fig. 1: einen Öl- und Benzinabscheider mit Schwimmerverschluß
- Fig. 2: einen Fettabscheider
- Fig. 3: einen anderen Fettabscheider
Bei dem Abscheider nach Fig. 1 handelt es sich um einen handelsüblichen Abscheider nach DIN 1999, Teil 2, in Stahlbetonausführung. Der monolithisch ausgeformte Abscheidebehälter 1 ist oben durch einen Schachtdeckel 2 verschlossen, der zum Entsorgen und Kontrollieren geöffnet werden kann. Der im oberen Bereich einmündende, nach unten gelenkte Zulauf 3 ist als ein in Mauerflansche 4 eingesetzter muffenloser Rohrkrümmer 5 ausgebildet, der im Austrittsbereich in Tangentialrichtung verläuft. Der Reinwasser-Ablauf 6 enthält einen innenliegenden Winkel 7 mit einem Ventilsitz 8 als Ablauföffnung und einen außenliegenden Steigkanal 9 mit oberer Überfallkante 10, die den Spiegel 11 im Abscheider festlegt.

Auf den Ventilsitz 8 ist ein Käfig 12 aufgesetzt, der als Führung für das Schwimmerventil 13 dient. Der Schwimmer ist so tariert, daß er an der Grenzschicht Leichtflüssigkeit/Wasser schwimmt und den Auslauf bei Erreichen der maximalen Leichtflüssigkeitsschicht verschließt.

Des weiteren ist am Ventilsitz ein hohlzylindrischer Vorlagebehälter 14 befestigt, dessen Oberkante erheblich unter dem Betriebsspiegel 11 liegt. Die Oberkante ist so bemessen, daß die Trennlinie zwischen aufgerahmter Leichtflüssigkeit und Wasser bei Verschließen des Auslaufs noch oberhalb dieser Kante liegt.

In den waagerechten Schenkel des Steigkanals 9 mündet eine Frischwasserleitung 15, die über eine Trenneinrichtung (nicht dargestellt) an das Trinkwassernetz angeschlossen ist.

Bei Erreichen der maximal zulässigen Schichtdicke der aufgerahmten Leichtflüssigkeit hat das Schwimmerventil den Reinwasser-Ablauf verschlossen. Dadurch steigt bei weiterem Zulauf der Spiegel im Abscheider bis zu einem Niveau, wo die Alarmeinrichtung anspricht und das fällige Entsorgen des Abscheiders anzeigt. Nach Abheben des Deckels 2 wird der Abscheiderinhalt einschließlich Vorlagebehälter vollständig abgesaugt. Der Schwimmer muß zur Kontrolle herausgenommen werden. Der Vorlagebehälter ist danach mit Frisch- oder einem verschmutzungsfreien Brauchwasser bis zum Überlauf zu füllen. Danach ist der Schwimmer wieder einzusetzen.

Falls vergessen wurde, den Schwimmer beim Entsorgen herauszunehmen, sitzt der Schwimmer auf dem Ventilsitz. Falls er beim Wiederbefüllen des Vorlagebehälters nicht vom Ventilsitz abhebt, kann durch Einleiten von Frischwasser durch das Leitungssystem 15 ein Gegendruck aufgebaut werden, der den Schwimmer schließlich zum Abheben veranlaßt.

Der Vorlagebehälter 14 kann im Durchmesser so groß ausgebildet werden, daß um den Schwimmerkäfig 12 ein Koaleszenzeinsatz gelegt werden kann.

Zur Reinigung des Einsatzes wird dann vorteilhafterweise die ganze Baueinheit herausgenommen.

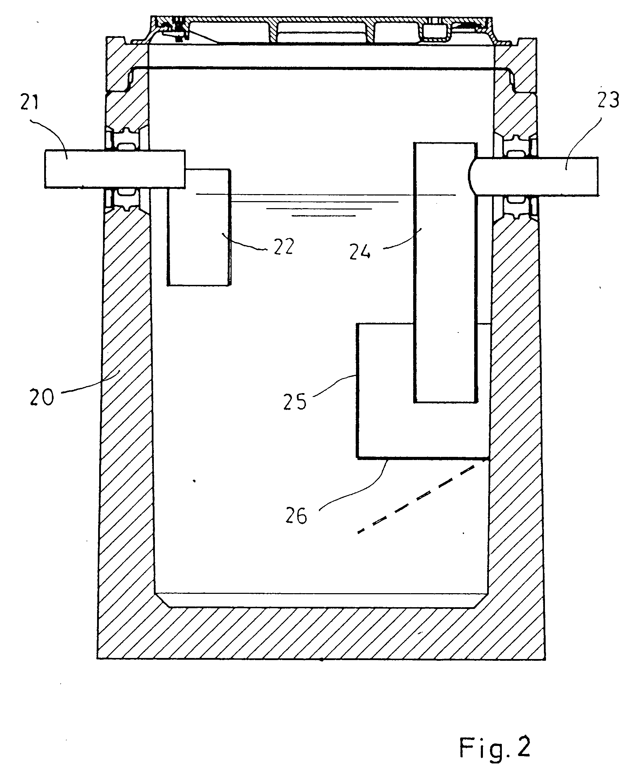

Fig. 2 stellt einen Fettabscheider 20 in Stahlbetonbauweise dar. Hier ist dem Zulauf 21 ein Leitrohr 22 nachgeordnet und dem Auslauf 23 ein Steigkanal 24 vorgeordnet. Der Vorlagebehälter 25 zum Wiederbefüllen ist als an die Behälterwand angesetzter Kasten ausgebildet, dessen Boden 26 beim Entsorgen des Abscheiders selbsttätig nach unten klappt und dadurch sein Inhalt ebenfalls der Entsorgung zuführt. Nach dem Entsorgen wird der Boden manuell wieder verschlossen, so daß der Vorlagebehälter wieder befüllt werden kann.

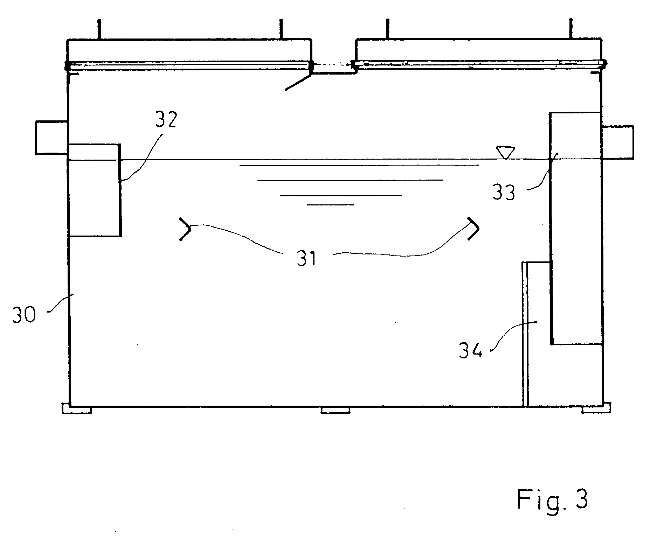

Fig. 3 stellt einen anderen Fettabscheider 30 in Stahl- oder Edelstahlblechbauweise dar. Die Profile 31 sind Querverstrebungen, die das Ausbeulen der Seitenwände des oberirdisch aufgestellten Abscheiders verhindern sollen. Der Abscheider ist wieder mit einer einlaufseitigen Prall- und Leitwand 32 und einem auslaufseitigen Steigkanal 33 ausgerüstet. Der Vorlagebehälter 34 für das Wiederbefüllen ist als Stauwand ausgebildet, die die Auslauföffnung umgibt. Der Abstand ist so groß, daß dort der Saugrüssel einfahren und den Inhalt absaugen kann.

Selbstverstandlich ist die vorbeschriebene Technik des Wiederbefüllens eines entleerten Abscheiders auch bei Sinkstoffabscheidern, wie z.B. Stärkeabscheidern anwendbar. Auch dort kann vor dem Reinwasserablauf eine Stauwand vorgesehen werden, hinter die vor Wiederinbetriebnahme ein bis zum Reinwasserablauf anstehendes Wiederbefüllungsvolumen gefüllt wird.

## Patentansprüche

1. Verfahren zum Betrieb eines Leicht- oder Sinkstoffabscheiders, insbesondere eines Öl-, Fett- oder Stärkeabscheiders, bei dem der Abscheidebehälter (1, 20, 30) in vorgegebenen Zeitabständen vollständig entleert und danach vor Wiederinbetriebnahme mit verschmutzungsfreiem Wasser bis zu einer über der untenliegenden Reinwasser-Ablauföffnung (7) liegenden Füllhöhe wiederbefüllt wird, so daß bei der Wiederinbetriebnahme keine Verschmutzungen durch die dann frei zugängliche Reinwasser-Ablauföffnung (7) abfließen können, **dadurch gekennzeichnet**, daß nur in der nächsten Umgebung der Reinwasser-Ablauföffnung (7) ein gegenüber dem Abscheidervolumen kleines verschmutzungsfreies, bis auf die Füllhöhe reichendes Wiederbefüllungsvolumen eingebracht wird.

2. Verfahren nach Anspruch 1, **dadurch gekennzeichnet**, daß das durch Umgrenzungen (14, 25, 34) gefaßte Wiederbefüllungsvolumen beim Entleeren des Abscheiders selbsttätig mit abgezogen wird.

3. Verfahren nach Anspruch 1 oder 2, **dadurch gekennzeichnet**, daß das Wiederbefüllungsvolumen in den Steigkanal (9) hinter der Reinwasser-Ablauföffnung (7) eingebracht wird.

4. Verfahren nach Anspruch 3, **dadurch gekennzeichnet**, daß beim Einbringen des Wiederbefüllungsvolumens die Reinwasser-Ablauföffnung (7) geschlossen ist.

5. Verfahren nach Anspruch 1 bis 4, **dadurch gekennzeichnet**, daß zum Wiederbefüllen Brauchwasser anderer betrieblicher Herkunft verwendet wird.

6. Verfahren nach Anspruch 1 bis 4, **dadurch gekennzeichnet**, daß zum Wiederbefüllen aus dem Reinwasserbereich des Abscheiders stammendes und gespeichertes Wasser verwendet wird.

7. Verfahren nach Anspruch 1 bis 4, **dadurch gekennzeichnet**, daß zum Wiederbefüllen gereinigter Abscheiderinhalt aus dem Entsorgungsfahrzeug verwendet wird.

8. Abscheider zur Durchführung des Verfahrens nach den Ansprüchen 1 bis 7, enthaltend einen durch eine Prall- oder Leitwand (5,22,32) nach unten gelenkten Einlauf (3, 21), eine gegenüberliegende untere Reinwasser-Ablauföffnung (7), die in einen Steigkanal (9,24,33) mit Überlaufschwelle (10) mündet, und eine die Reinwasser-Ablauföffnung (7) umgebende Stauwand (14,25), die ein kleines Flüssigkeitsvolumen umgrenzt, **gekennzeichnet** durch eine in den waagerechten Schenkel (6) des Steigkanals (9) mündende Frischwasserleitung (15) für die Zufuhr von Wiederbefüllungswasser.

## Claims

1. Prodecure for the operation of a separator for suspended and settleable solids, particularly an oil, grease or starch separator, where the separator (1, 20, 30) is emptied completely in predetermined time intervals and then, prior to restart, is filled with clean water up to the filling level above the lower discharge opening for clarified water (7), so that during start-up no impurities can float through the discharge opening for clarified water (7) which is freely accessible at that time, **characterized in that** that the clean water refill volume being introduced just around the discharge opening for clarified water (7) and only up to the filling level, is small compared to the volume of the separator.

2. Procedure according to claim 1, **characterized in that** the clean water refill volume, held within an enclosure (14, 25, 34), is automatically discharged when emptying the separator.

3. Procedure according to claim 1 or 2, **characterized in that** the refill volume is introduced into the standpipe (9) behind the discharge opening for clarified water (7).

4. Procedure according to claim 3, **characterized in that** the discharge opening for clarified water (7) is closed while refilling with clean water.

5. Prodecure according one of the claims 1 to 4, **characterized in that** the water which is used for refilling is service water from other parts of the treatment plant.

6. Procedure according to one of the claims 1 to 4, **characterized in that** the water which is used for refilling is clarified and accumulated water from the the separator.

7. Procedure according to claims 1 through 4, **characterized in that** the water used for refilling is clarified water from the separator which is taken from the evacuation vehicle.

8. Separator determined to carry out the procedure according to the claims 1 through 7, comprising an inlet (3, 21) with guide baffle (5, 22, 23) directing the flow downward, a lower discharge opening for clarified water (7) facing the inlet and discharging into a standpipe (9, 24, 33) with overflow baffle (10), and a baffle plate (14, 25) enclosing the discharge opening for clarified water (7) and holding a small volume **characterized** by a fresh water pipe (15) for the refill water supply which discharges into the horizontal segment (6) of the standpipe (9).

## Revendications

1. Procédé destiné à l'opération d'un séparateur à matières suspendues et sédimentées, particulièrement un séparateur à huiles, grasses ou fécules de pommes de terres, selon lequel le séparateur (1, 20, 30) est vidé complètement à intervalles de temps prédéterminés et rempli de l'eau propre, avant la remise en marche, jùsqu'à l'hauteur de remplissage se trouvant au-dessus de l'ouverture de décharge de l'eau clarifiée (7) inférieure, de sorte que les impuretés rentrant lors de la remise en marche ne peuvent pas passer par l'ouvérture de décharge de l'eau clarifiée (7) laquelle est accessible librement à ce moment, **caractérisé en ce que** le volume de remplissage de l'eau propre, introduit seulement à l'entour de l'ouverture de décharge (7) de l'eau clarifiée et jusqu'à l'hauteur de remplissage, est très petit en comparaison du volume du séparateur.

2. Procédé selon revendication 1, **caractérisé en ce que** le volume de remplissage de l'eau propre se trouvant dans une enceinte (14, 25, 34) est déchargé automatiquement lors du vidage du séparateur.

3. Procédé selon une des revendications 1 ou 2, **caractérisé en ce que** le volume de remplissage de l'eau propre est introduit dans le tuyau de montée (9) derrière l'ouverture de décharge de l'eau clarifiée (7).

4. Procédé selon revendication 3, **caractérisé en ce que** l'ouverture de décharge de l'eau clarifiée (7) est fermée lors du remplissage de l'eau propre.

5. Procédé selon les revendications 1 à 4, **caractérisé en ce que** l'on utilise l'eau non potable d'origine ailleurs de l'entreprise pour le nouveau remplissage.

6. Procédé selon les revendications 1 à 4, **caractérisé en ce que** l'eau utilisée pour le nouveau remplissage est l'eau clarifiée et accumulée provenant du séparateur.

7. Procédé selon les revendications 1 à 4, **caractérisé en ce que** l'eau utilisée pour le nouveau remplissage est l'eau clarifiée du séparateur provenant du véhicule d'évacuation.

8. Séparateur destiné à l'accomplissement du procédé selon les revendications 1 à 7 constitué par une entrée (3, 21) pourvue d'une chicane (5, 22, 23) dirigeant l'eau vers le bas, une ouverture de décharge de l'eau clarifiée (7) inférieure en face de l'entrée laquelle débouche dans un tuyau de montée (9, 24, 33) muni d'un bord-déversoir (10) et une enceinte de retenue d'un petit volume (14, 25) autour de l'ouverture de décharge de l'eau clarifiée (7), **caractérisé** par une conduite d'eau d'appoint (15) débouchant dans la partie horizontale (6) du tuyau de montée (9) destinée au remplissage de l'eau propre.
